# EUROPEAN PATENT SPECIFICATION

(11) **EP 2 000 885 B1**
(45) Date of publication and mention of the grant of the patent: **26.01.2011**
(21) Application number: 07109937.8
(22) Date of filing: 08.06.2007
(51) Int. Cl.: G06F 3/01

(54) **Haptic display for a handheld electronic device**
Haptische Anzeige für ein elektronisches Handgerät
Affichage haptique pour un dispositif électronique portatif

(43) Date of publication of application: 10.12.2008
(73) Proprietor: RESEARCH IN MOTION LIMITED, Waterloo, Ontario N2L 3W8 (CA)
(72) Inventor: Hui, Edward, Waterloo, Ontario N2T 2J3 (CA); Lowles, Robert J., Waterloo, Ontario N2T 2J5 (CA); Zhongming, Richard MA, Waterloo, Ontario N2V 2A3 (CA)
(74) Representative: Hibbert, Juliet Jane Grace

(56) References cited:
- EP-A- 1 260 949
- EP-A- 1 752 860
- US-A1- 2003 058 265
- US-A1- 2004 095 330
- US-A1- 2004 192 423
- US-A1- 2006 109 256

## Description

A portion of the disclosure of this patent document contains material which is subject to copyright protection. The copyright owner has no objection to the facsimile reproduction by any one of the patent document or patent disclosure as it appears in the Patent and Trademark Office patent file or records, but otherwise reserves all copyright rights whatsoever.

### FIELD

The present disclosure, in a broad sense, is directed toward handheld electronic devices. In particular, the disclosure is based on (but not limited to) handheld communication devices that have wireless communication capabilities and the networks within which the wireless communication devices operate. (Other exemplary devices to which the disclosure may be applied include PDA's (with or without communication capabilities), remote controls, game consoles, GPS units, portable media players, and others in which user input is based on touch-screen inputs as opposed to switch-based inputs.) More particularly, the disclosure presents solutions regarding displays capable of facilitating user input on such devices.

### BACKGROUND

With the proliferation of wireless communications systems, compatible handheld communication devices are becoming more prevalent, as well as advanced. Where in the past such handheld communication devices were typically limited to either voice transmission (cell phones) or text transmission (pagers and PDAs), today's consumer often demands a combination device capable of performing both types of transmissions, including even sending and receiving e-mail. Furthermore, these higher-performance devices can also be capable of sending and receiving other types of data including that which allows the viewing and use of Internet websites. These higher level functionalities necessarily require greater user interaction with the devices through included user interfaces (UIs) which may have originally been designed to accommodate making and receiving telephone calls and sending messages over a related Short Messaging Service (SMS). As might be expected, suppliers of such mobile communication devices and the related service providers are anxious to meet these customer requirements, but the demands of these more advanced functionalities have in many circumstances rendered the traditional user interfaces unsatisfactory - a situation that has caused designers to have to improve the UIs through which users input information and control these sophisticated operations.

Additionally, the size of the display screen available on such devices has seen increasing attention. In order to maximize the size of the display screen on a device, it may be necessary to limit input devices located on the front surface of the device. Typically, this can involve reducing the size of a keyboard on the front surface or assembling the device in a clam-shell, slidable, or other multi-part configuration. Alternatively, a touch screen can be implemented such that the user of the device inputs information into the device using a stylus, the user's fingertip, or other object. The stylus interface or other touch screen input devices prevent the user from experiencing tactile feedback from activation of a portion of the display screen. This can lead the user to make mistakes in inputting data and/or to become frustrated while trying to input the desired information.

The present disclosure provides solutions to these and other problems through the use of display that provides tactile (haptic) feedback to a user to indicate that a screen-inputted selection has been made.

US Patent Application No 2003/058265 provides a system for providing force feedback in response to touchscreen inputs by a user is disclosed. A touchscreen overlayed upon a liquid crystal display (LCD) receives user input and provides a corresponding signal to a controller or CPU. The CPU then activates an actuator for physically vibrating or pulsing the electronic device in which the touchscreen and LCD are contained. The physical movement of the electronic device provides tactile feedback to the user for indicating that an input to the touchscreen has been made. The actuator can include a vibrating motor, solenoid and other mechanical means for providing various types of physical movement.

US Patent Application No. 2006/109256 relates to a planar touch control to provide input to a computer and haptic feedback is provided thereto. A touch control includes a touch input device with a planar touch surface that inputs a position signal to a processor associated with the computer based on a location of user implemented contact on the touch surface. The computer can position or modify a cursor or image in a displayed graphical environment based at least in part on the position signal, or perform a different function. At least one actuator is also coupled to the touch input device and outputs a force to provide a haptic sensation to the user via the touch surface.

European Patent Application No. 1752860 describes a terminal that includes a touch screen type display part for displaying key buttons used for a user to input information to the terminal, a speaker part for outputting an audio signal, when the user has correctly touched the key buttons, to inform the user that the key buttons have been correctly touched and inputted, and a control part for controlling the display part and the speaker part. When a user of the terminal correctly touches the key buttons on the touch screen of the terminal, the user of the terminal can perceive, in the form of visual sensation, hearing sensation, and/or vibration sensation, that the key buttons have been correctly touched, and therefore, it is possible to more easily and conveniently manipulate the key buttons on the terminal having the touch screen.

US Patent Application No. 2004/192423 describes a mobile communication device that employs electrical stimulation for silently alerting the user that information has been received by the mobile communication device. The mobile communication device includes an electrical power source for generating an electrical signal and an electrode assembly coupled to the electrical power source for communicating the electrical signal to the body of a user of the mobile communication device. The electrical signal provides an electrical stimulation to the body of the user when communicated to the body by the electrode assembly for silently alerting the user that information has been received by the communication device.

US Patent Application No. 2004095330 discloses an electro-tactile panel (ETP) apparatus for a display panel. The ETP apparatus is composed of three major parts: a controller, a panel, and a holder. The panel consists of four layer made of transparent material. The first layer is an insulating substrate, the second layer is a conductive layer formed of a plurality of horizontal electrodes on the first layer. The third layer is an insulating layer having holes formed therein, which corresponding to the electrodes on the second layer. The fourth layer is a conductive layer formed of a plurality of vertical electrodes on the third layer. The panel is attached to the display panel by means of the holder apparatus. The electro-tactile signal and cursor position is process by the controller when the skin touches the panel so that some positions of the vertical electrodes and horizontal electrodes are electrically connected through the holes.

### BRIEF DESCRIPTION OF THE DRAWINGS

Exemplary methods and arrangements conducted and configured according to the advantageous solutions presented herein are depicted in the accompanying drawings, wherein:

FIG. 1 depicts a handheld communication device with a haptic, touch-sensitive (HTS) display cradled in the palm of a user's hand;

FIG. 2A depicts a handheld communication device with an HTS display showing both an alphabetic key arrangement and a navigational key arrangement;

FIG. 2B depicts a handheld communication device with a phone key arrangement and a navigational key arrangement on an HTS display;

FIG. 3A is a schematic section view illustrating the layers of an HTS display according to the disclosure;

FIG. 3B is a schematic plan view of the top layer illustrated in FIG 3B;

FIG. 4 illustrates an exemplary QWERTY keyboard layout;

FIG. 5 illustrates an exemplary QWERTZ keyboard layout;

FIG. 6 illustrates an exemplary AZERTY keyboard layout;

FIG. 7 illustrates an exemplary Dvorak keyboard layout;

FIG. 8 illustrates a QWERTY keyboard layout paired with a traditional ten-key keyboard; and

FIG. 9 is a block diagram representing a wireless handheld communication device interacting in a communication network.

### DETAILED DESCRIPTION

As suggested hereinabove, one of the more important aspects of a handheld electronic device to which this disclosure is directed is its size. While some users will grasp the device in both hands, it is intended that a predominance of users will cradle the device in one hand in such a manner that input and control over the device can be effected using the thumb of the same hand in which the device is held, however additional control can be effected by using both hands. As a handheld device that is desirably pocketable, the size of the device must be kept relatively small. Of the device's dimensions, limiting its width is important for the purpose of assuring cradleability in a user's hand. Moreover, it is preferred that the width of the device be maintained at less than eight centimeters (approximately three inches). Keeping the device within these dimensional limits provides a hand cradleable unit that users prefer for its useability and portability. Limitations with respect to the height (length) of the device are less stringent when considering hand-cradleability. Therefore, in order to gain greater size, the device can be advantageously configured so that its height is greater than its width, but still remains easily supported and operated in one hand.

A potential problem is presented by the small size of the device in that there is limited exterior surface area for the inclusion of user input and device output features. This is especially true for the "prime real estate" on the front face of the device, where it is most advantageous to include a display screen 322 that outputs information to the user and a keypad for entry of textual data.

In a presently described embodiment, a key arrangement (a "virtual" key arrangement) is presented entirely on the display screen 322 of the handheld communication device, while in other embodiments both a physical keyboard and a key arrangement on the display screen 322 are presented to the user on the front surface of the device. In this presentation, the key arrangement shown on the display screen 322 can be the same as or different from the arrangement of the physical keyboard. The key arrangements are presented below other data on the display screen 322, thereby assuring that the user's hands and fingers do not block viewing of the other data during entry.

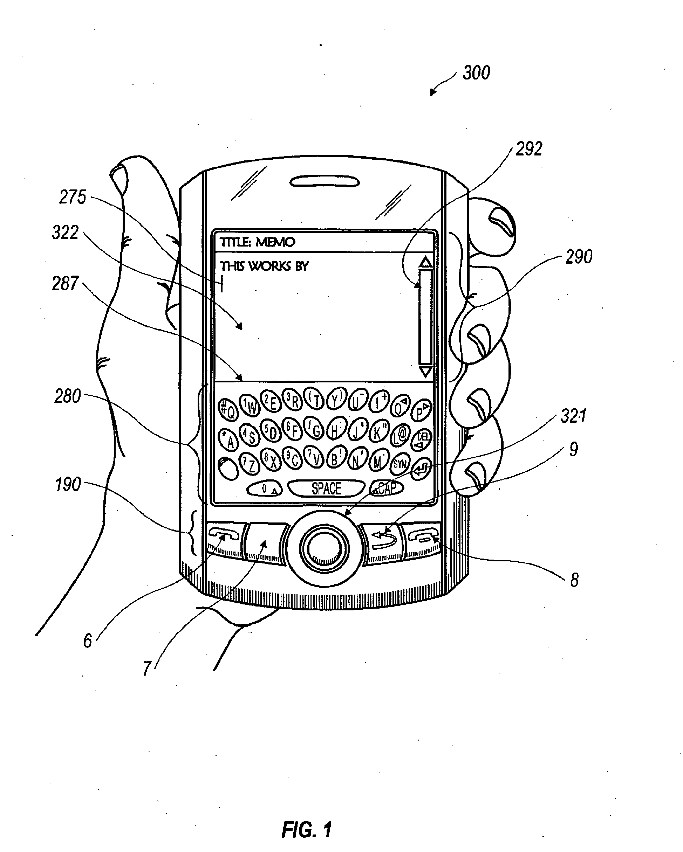

To facilitate textual data entry, an alphabetic key arrangement can be displayed on the display screen 322 for inputting textual characters. In one version, a full alphabetic key arrangement is utilized in which there is one letter per key (see FIG. 1 for an example). This is preferred by some users because the keys can be arranged to resemble a standard keyboard with which they are most familiar. In this regard, the associated letters can be advantageously organized in QWERTY, QWERTZ, AZERTY, or Dvorak layouts, among others, thereby capitalizing on certain users' familiarity with these special letter orders. In order to stay within the bounds of a limited display surface area, however, each of the keys must be commensurately small when, for example, twenty-six keys must be provided in the instance of the English language. An alternative configuration is to provide a reduced alphabetic key arrangement in which at least some of the keys have more than one letter associated therewith, as is also known in the art. This means that fewer keys are required, which makes it possible for those fewer keys to each be larger than in the instance when a full key arrangement is provided on a similarly dimensioned device. Some users will prefer the solution of the larger keys over the smaller ones, but it is necessary that software or hardware solutions be provided in order to discriminate which of the several associated letters the user intends based on a particular key actuation, a problem the full alphabetic key arrangement avoids. Preferably, this character discrimination is accomplished utilizing disambiguation software included on the device. To accommodate software use on the device, a memory and microprocessor are provided within the body of the handheld unit for receiving, storing, processing, and outputting data during use. Therefore, the problem of needing a textual data input means is solved by the provision of either a full or reduced alphabetic key arrangement on the presently disclosed handheld electronic device.

Keys perform well as data entry devices but present problems to the user when they must also be used to effect navigational control over a screen-cursor. In order to solve this problem, the handheld electronic device can include an auxiliary input that acts as a cursor navigational tool and which is also exteriorly located upon the front face of the device. Its front face location is particularly advantageous because it makes the tool easily thumb-actuable. In a particularly useful embodiment, the navigational tool is a trackball which is easily utilized to instruct two-dimensional screen cursor movement in substantially any direction, as well as to act as an actuator when the ball of the trackball is depressed like a button. The placement of the trackball is preferably below the display screen 322 and above any additional input buttons (e.g., physical buttons) on the front face of the device; here, it does not block the user's view of the display screen 322 during use (see FIG. 1 for an example).

In some configurations, the handheld electronic device may be standalone in that it does not connect to the "outside world." One example would be a PDA that stores such things as calendars and contact information but is not capable of synchronizing or communicating with other devices. In most situations such isolation will be viewed detrimentally in that synchronization is a highly desired characteristic of handheld devices today. Moreover, the utility of the device is significantly enhanced when connectable within a system, and particularly when connectable on a wireless basis in a network in which voice, text messaging, and other data transfer are accommodated.

As shown in FIG. 1, the handheld device 300 is cradleable in the palm of a user's hand. The handheld device 300 is provided with a touch-sensitive display screen 322 for communicating information to a user and a key arrangement 280 on the display screen 322 to enter text data and place telephone calls. As explained in greater detail below, the display screen is adapted to provide tactile feedback to the user to indicate that a particular key, icon, or other graphical user interface (GUI) has been "pressed" or activated. Such a display screen is referred to herein as "haptic, touch-sensitive," or "HTS." In one embodiment, a set of navigational keys 190 are provided below the display screen 322 on the handheld device 300. This set of navigational keys 190 are provided through physical keys that affixed to the device and allow the user to navigate through an application page shown on the display screen 322. In this set of navigational keys 190, a connect/send key 6 is preferably provided to assist the user in placement of a phone call. Additionally, a disconnect/end key 8 is provided. The connect/send key 6 and disconnect/end key 8 preferably are arranged in a row that includes an auxiliary input device in the form of a navigation tool which is a trackball navigation tool 321 in at least one embodiment. Additionally, the navigational keys 190 that includes the trackball navigation tool 321 preferably has a menu key 7 and an escape key 9. The menu key 7 is used to bring up a menu on the display screen 322 and the escape key 9 is used to return to the previous screen or previous menu selection. While the navigational keys 190 in this embodiment are arranged using physical keys, other embodiments do not have a physical navigation row of keys and use only navigational keys shown on the display of the device 300.

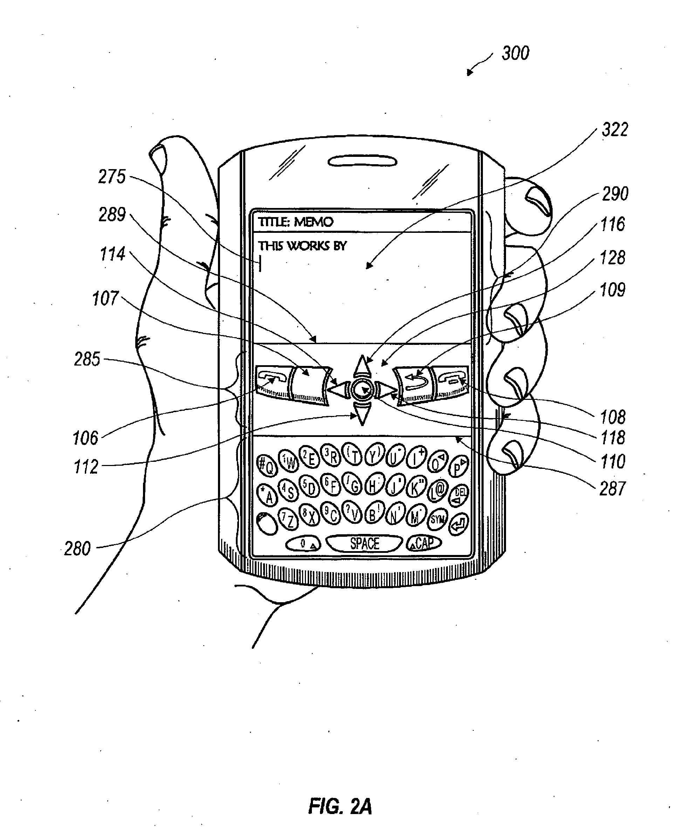

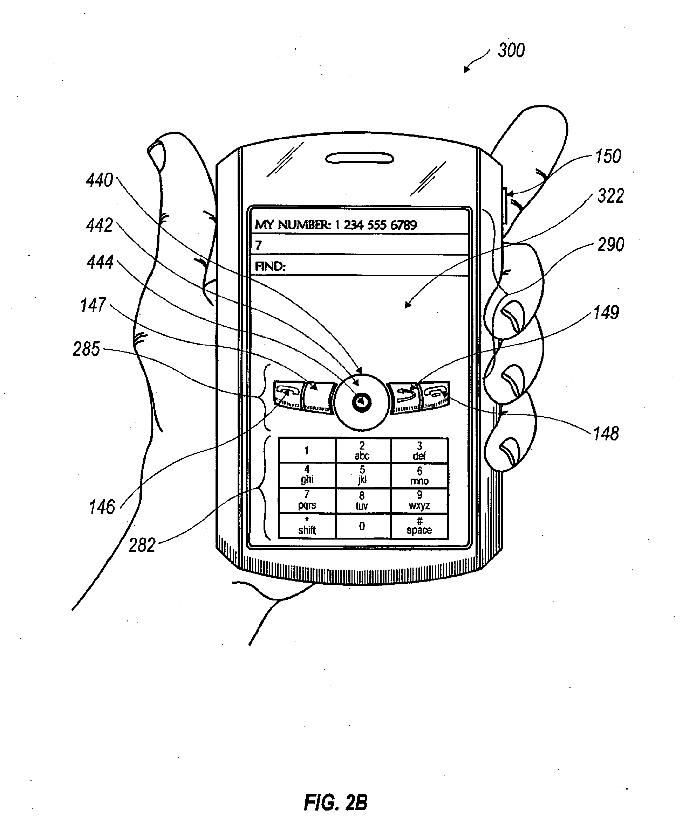

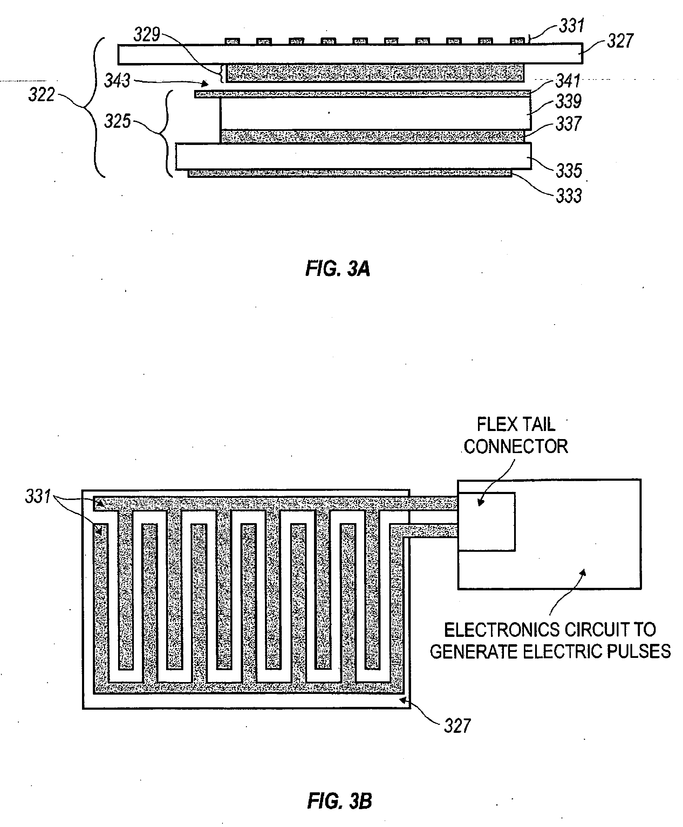

As further illustrated via FIGS. 2A and 2B, the HTS display screen 322 may include a full alphanumeric key arrangement 280 that is reconfigurable to a different key arrangement 282 as a function of the application being implemented by the device (e.g., sending emails or text messages (FIG. 2A) or placing phone calls (FIG. 2B)). The display screen 322 presents these visibly different key arrangements through a touch-sensitive display mechanism which can be a LCD screen. Details regarding the layers of material involved in the construction of such HTS display screens 322 are described below in relation to FIGS. 3A and 3B.

An exemplary embodiment of the technology described in this disclosure concerns a haptic, touch-sensitive (HTS) display screen 322. The HTS display screen 322 is configured for incorporation on a multi-mode, microprocessor-controlled wireless handheld device 300. The handheld device 300 can be a two-way mobile communication device having electronic messaging communications capabilities and possibly also voice communications capabilities. Depending on the functionality provided by the handheld device 300, in various embodiments the handheld device 300 may be a data communication device, a multiple-mode communications device configured for both data and voice communication, a mobile telephone, a personal digital assistance (PDA) enabled for wireless communication, etc.

The HTS display screen 322 may comprise a visual display that variously presents visibly different key arrangements to an operator or user of the handheld device 300 as a function of the mode of operation of the incorporating handheld device 300. Examples regarding the visibly different key arrangements are presented herein below. These examples are provided for illustrative purposes and are not intended to limit the presentation of the visibly different key arrangements to the ones described below. Further, the HTS display screen 322 comprises a display-presented key arrangement 280 taking the form of one of the following: a navigational key arrangement, a text entry key arrangement, a symbol entry key arrangement, and numeric entry key arrangement. These examples are provided for illustrative purposes and are not intended to limit the presentation of the visibly different key arrangements to the ones described below.

The HTS display screen 322 is capable of variably presenting visibly different key arrangements to an operator of the device 300. These different key arrangements can be shown to the user through the display screen 322. This enables the key arrangement to be tailored to a specific application running on the handheld device 300 or mode in which the device 300 is currently operating. Some examples of programs that the device 300 could be capable of running include an email application, a memo application, a calendar application, and an address book. These various applications could require different types of input devices such as an alphabetic key arrangement to enter textual data into the application, such as the memo application. If the handheld device 300 is being operated in a mode such that it is enabled to dial or receive telephone calls, a telephone keypad can be displayed on the display screen 322 to enable the user to enter telephone numbers or other related information. Likewise in a data communication mode, the display screen 322 features an alphabetic key arrangement to enable entry of alphabetic characters and other textual data such as symbols and punctuation. In at least one embodiment, the display screen 322 presents an alphanumeric key arrangement to enable entry of alphabetic or numeric characters and other textual data such as sysmbols and punctuation, while in the data communication mode.

In the case of virtual keys, the indicia for the respective keys are shown on the display screen 322, which in one exemplary embodiment is enabled by touching the display screen 322, for example, with a fingertip to generate the character or activate the indicated command or function. Some examples of display screens 322 capable of detecting a touch include resistive, capacitive, projected capacitive, infrared, and surface acoustic wave (SAW) touchscreens. According to this disclosure, as alluded to above, such a touchscreen is configured to provide tactile feedback to the user when the user touches and activates a button, icon, or other GUI presented on the display screen, i.e., it is a haptic, touch-sensitive (HTS) display screen.

Details as to the configuration of such an HTS display screen 322 are illustrated in FIGS. 3A and 3B. As shown in FIG. 3A, the display screen includes as primary components a color LCD stack-up 325; a lens cover 327 disposed over the LCD stack-up 325 to protect it; a touch-sensitive assembly 329 configured and disposed to sense when a user touches the screen (e.g., with a fingertip) and to identify to the device's microprocessor where that contact has occurred; and a haptic (i.e., feedback-providing) layer 331. The LCD stack-up 325 suitably includes a bottom polarizer 333, a bottom glass plate 335, a liquid crystal layer 337, a top glass plate 339 and a top polarizer 341, along with suitable color filter elements (not shown), e.g., red, green, and blue color filter elements, as is known in the art. In the illustrated embodiment, the touch-sensitive assembly 329 is disposed on the inner surface of the lens cover 327, with an optional gap 343 between the touch-sensitive assembly 329 and the LCD stack-up 325. Suitably, the touch-sensitive assembly is a resistive assembly, a capacitive assembly, a projected capacitive assembly, an infrared assembly, a surface acoustic wave (SAW) assembly, or any other known type of assembly used in the construction of touch-sensitive screens and known in the art.

As shown in more detail in FIG. 3B, the haptic layer 331 is formed as a gridwork of transparent electrical conductors in the form of an indium tin oxide (ITO) film or an antimony tin oxide (ATO) film disposed on the exterior (upper) surface of the lens cover 327. Suitably, the conductors may be formed in the shape of interleaved combs, with the "teeth" or "tines" of one comb extending between the teeth or tines of the other comb and each comb constituting an electrical conductor. The width between adjacent grid lines is optimized at about five millimeters, so that when a user touches the screen at any location, his finger will overlap and touch at least one grid line of each of the two electrical conductor combs. In this manner, the user's fingertip will complete an electrical circuit. Other conductor grid patterns besides interleaved combs, configured such that a user's fingertip can overlap conductors to complete an electrical circuit are considered within the scope of this disclosure.

The handheld device further includes a pulse generator that supplies very low level electric current to the conductor combs of the haptic layer 331. Electric pulses on the order of about 0.2 to about 0.5 milliseconds are generated when the microprocessor determines that the screen 322 has not only been touched (i.e., by means of touch-sensitive assembly 329), but also that it has specifically been touched at the location of a button, screen icon, or other GUI so as to enter input into the handheld device or make a selection of some sort. As a result, the user is provided with a very slight tingling or buzzing feel in their fingertip that lets them know that a button or icon has been "pressed," that a selection has been made, etc., and that the device has registered it. The electrical pulses may be rendered as a short burst of one positive pulse followed by one negative pulse. Furthermore, given the resistance of human skin (up to 100 kΩ), the pulse generator generates pulses on the order of 100 Volts (positive or negative), up to about 200 Volts, so that the user can sense the pulse. The amperage, however, is generally quite small so that the user is not shocked. In particular, for safety, the current should be controlled such that it is less than 5 milliamps, with a preferred level being around two to three milliamps. (It is believed that 1 microamps may be the lowest level current that someone could sense.)

In at least one embodiment, not specifically illustrated, the device includes a resistance-measuring circuit that measures the user's fingertip skin resistance; the voltage of the generated pulses can be adjusted up or down accordingly. Additionally, in another embodiment, the device is configured to vary the pulse as a function of the button, icon, selection, or other GUI selected. In particular, the pulse pattern, strength, intensity, frequency, and/or duration can be varied to stimulate different tactility as a function of the screen selection that has been made. In this manner, the user is able to differentiate by feel what input he or she has made to the handheld wireless device. For example, the device may be configured to provide more intense stimulus when moving a volume "slider" to increase the volume of the device and less intense stimulus when moving the volume slider to decrease the volume of the device. Also, the device may be configured to provide a slight stimulus each time a possible selections is passed over by a cursor, e.g., when scrolling through a list of email contacts.

Thus, to summarize, a focus of this disclosure is on a handheld wireless communication device which includes a hand cradleable body; a display screen (e.g., a color LCD display screen) disposed on the body, with the display screen configured to display to a user of the device images of buttons, icons, and/or other graphical user interface items; a touch-sensing assembly with components disposed on or adjacent to the display screen, with the touch-sensing assembly being adapted to recognize when the user has touched the display screen and to discriminate where the user has touched the display screen; and a haptic assembly with components disposed on an upper surface of the display screen, with the haptic assembly being adapted to provide tactile stimulation to the user when the user has touched the display screen at a location corresponding to the image of a button, icon, or other graphical user interface displayed on the display screen. In specific embodiments, the haptic assembly is adapted to provide electrical stimulation to the user, and the haptic assembly comprises transparent electrical conductors arranged in a grid on the upper surface of the display screen. Specifically, the transparent electrical conductors may be arranged in the form of interleaved combs, and they may be formed from indium tin oxide, antimony tin oxide, or other transparent, electrically conductive material. The haptic assembly is adapted to provide electrical stimulation in the form of pulses. Preferably, the device is configured such that the electrical stimulation varies as a function of the button, icon, or other graphical user interface touched by the user. Additionally, the device may include a skin resistance-measuring circuit, such that the level of electrical stimulation provided by the haptic assembly is varied as a function of skin resistance measured by the resistance-measuring circuit.

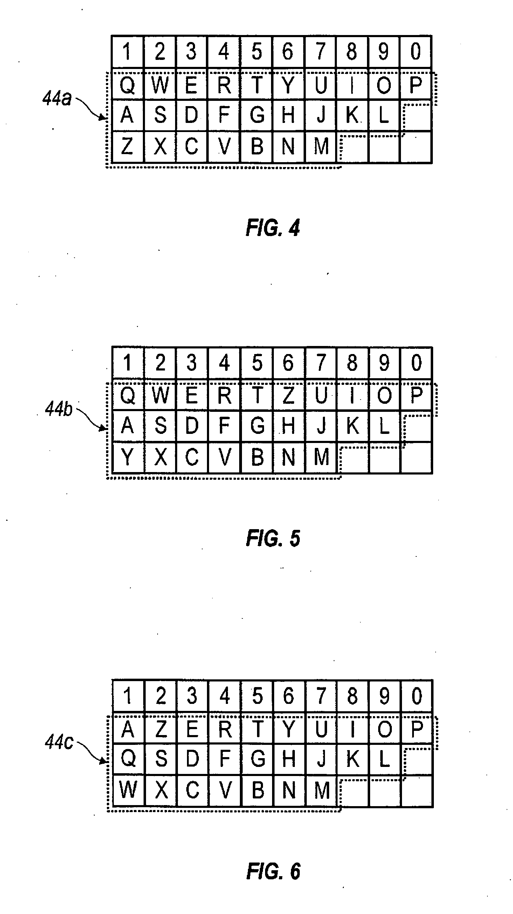

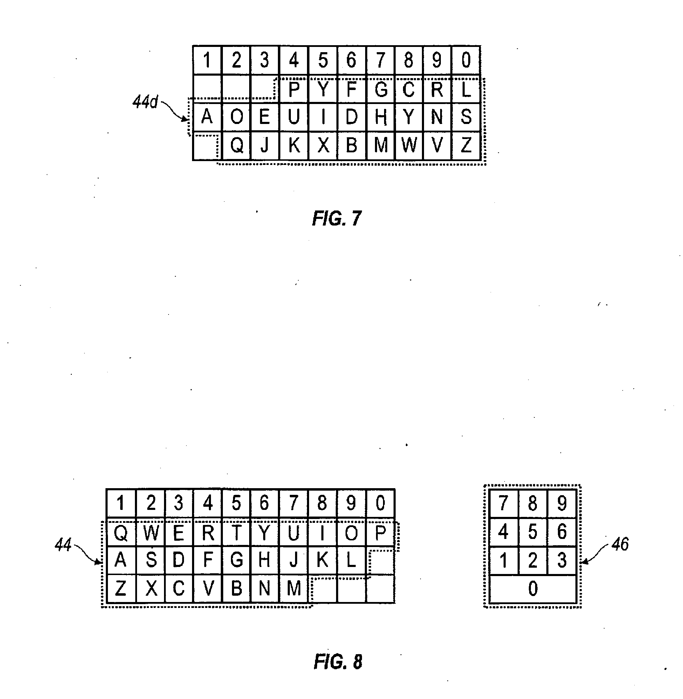

Reverting now to more general features of a device according to this disclosure, the various characters, commands, and functions associated with keyboard typing in general are traditionally arranged using various conventions. The most common of these in the United States, for instance, is the QWERTY keyboard layout. Others include the QWERTZ, AZERTY, and Dvorak keyboard configurations. The QWERTY keyboard layout is the standard English-language alphabetic key arrangement 44a shown in FIG. 4. The QWERTZ keyboard layout is normally used in German-speaking regions; this alphabetic key arrangement 44b is shown in FIG. 5. The AZERTY keyboard layout 44c is normally used in French-speaking regions and is shown in FIG. 6. The Dvorak keyboard layout was designed to allow typists to type faster; this alphabetic key arrangement 44d is shown in FIG. 7. In other exemplary embodiments, keyboards having multi-language key arrangements can be contemplated.

Alphabetic key arrangements are often presented along with numeric key arrangements. Typically, the numbers 1-9 and 0 are positioned in the row above the alphabetic keys 44a-d, as shown in FIG. 4-8. Alternatively, the numbers share keys with the alphabetic characters, such as the top row of the QWERTY keyboard, as is also known in the art. Yet another exemplary numeric key arrangement is shown in FIG. 8, where a "ten-key" style numeric keypad 46 is provided on a separate set of keys that is spaced from the alphabetic/numeric key arrangement 44. The ten-key styled numeric keypad 46 includes the numbers "7", "8", "9" arranged in a top row, "4", "5", "6" arranged in a second row, "1", "2", "3" arranged in a third row, and "0" in a bottom row.

Some handheld devices include a combined text-entry key arrangement and a telephony keyboard. Examples of such handheld devices 300 include mobile stations, cellular telephones, wireless personal digital assistants (PDAs), two-way paging devices, and others. Various keyboards are used with such devices and can be termed a full keyboard, a reduced keyboard, or phone key pad, while in other handheld devices 300, the key arrangements can be presented upon user request, thereby reducing the amount of information presented to the user at any given time and enabling easier reading and viewing of the same information.

In embodiments of a handheld device 300 having a full key arrangement, the alphabetic characters are singly associated with the plurality of physical keys. Thus, in an English-language keyboard of this configuration, there are at least 26 keys in the plurality so that there is at least one key for each letter.

The International Telecommunications Union ("ITU") has established telephone standards for the arrangement of alphanumeric keys. A standard telephone numeric key arrangement corresponds to ITU Standard E.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994. As shown in FIG. 2B, the telephone numeric key arrangement with alphabetic letters can be presented on the adaptive display screen 322. The telephone numeric arrangement as shown can be aptly described as a top-to-bottom ascending order three-by-three-over-zero pattern.

The HTS display screen 322 of the present disclosure is capable of presenting key arrangements as described above, including those taking the form of one of the following: a navigational key arrangement, a text entry key arrangement, a symbol entry key arrangement, and a numeric entry key arrangement. In addition to the alphabetic character and numeric character arrangements described above, the navigational key arrangement can be like the ones shown in FIGS. 2A and 2B. The navigational key arrangement as described herein includes at least a navigation tool. Furthermore, the navigational key arrangement can include keys located proximate to the navigation tool that are used in performing navigation functions on the display of handheld device. These navigational keys can include the connect and disconnect keys as mentioned herein as well.

Referring now to FIG. 2A, one example of the navigation tool 128 includes a 4-way navigation button configuration with or without a centralized select key 110. This type of navigational key arrangement allows the user to navigate a cursor 275 on the display screen 322 in addition to navigating forms, web sites and other cursor-navigable pages presented on the display screen 322. Another type of navigational key arrangement, shown in FIG. 2B, has an inner key surrounded by an outer ring. The inner key is used to make selections of items that have been user-designated on the display screen 322 of the handheld electronic device 300. The outer ring can function as a scrolling device wherein a clockwise rotation moves the cursor down the page displayed on the screen 322 on the handheld electronic device 300 and a counter-clockwise rotation moves the cursor up the page. In other exemplary embodiments, the scrolling can be implemented in opposite directions as well. Additionally, arrows or other indicators can be provided in the outer ring to provide left and right navigation in addition to rotation indicators.

The alphabetic key arrangements are useful when entering text, but they do not provide easy navigation within the application portion of the display screen 322. Thus, a navigational key arrangement 285 is provided in other embodiments such as those shown in FIGS. 2A and 2B. These navigational key arrangements can be shown on the display screen 322 simultaneously with the alphabetic key arrangements or without the alphabetic key arrangements. When only the navigational key arrangement is shown in addition to the application running, a larger portion of display screen 322 can be devoted to the application running on the device 300. The navigational keys can be implemented such that a centralized navigation key is located within a row of other navigational keys. The navigation key enables the user to direct cursor navigation on the screen 322 of handheld device 300.

Referring to FIG. 2A, the navigational key arrangement 285 as shown is separated from the alphabetic key arrangement 280 by a dividing line 287 and from the currently running application by line 289. The navigational key arrangement 285 has a centralized navigation tool 128 that has directional keys to direct the cursor on the screen 322. The top key 116 directs a cursor 275 in an upward fashion on the display screen 322. The left key 114 directs the cursor 275 towards the left side of the display screen 322. Likewise, the right key 118 directs the cursor 275 towards the right side of the display screen 322 and the bottom key 112 directs the cursor 275 towards the bottom of the display screen 322. The center key 110 allows the user to make a selection of a user-designated item. In addition to the centralized navigation tool 128, the navigation row has a connect key 106 to place and answer telephone calls, a menu key 107 which displays a menu associated with a given application page, an escape key 109 which returns to the previously displayed application page, and a disconnect key 108 which disconnects or terminates a telephone call. While these keys are shown in FIG. 2A, other exemplary embodiments will not display the connect 106 and disconnect keys 108 unless the telephone application is running. Alternatively, the connect and disconnect keys 106, 108 appear when a telephone call is received when running another application.

In another exemplary embodiment, when a telephone application is running or when the device 300 is operating in a telephone mode, a telephone key arrangement 282 is shown on the HTS display screen 322 of the handheld device 300 shown in FIG. 2B. This telephone key arrangement is in the ITU standard phone layout as described above and with which users are familiar. In addition, a navigational key arrangement 285 is provided above the telephone key arrangement 282. Similar to other navigation row arrangements, this navigational key arrangement 285 has a centralized scrolling navigation key 440, a connect key 146, a menu key 147, an escape key 149, and disconnect key 148. The centralized navigation key 440 is one that allows the user to scroll through a list of items and select a user-designated item. The outer ring 442 of the centralized scrolling navigation key 440 allows the user to navigate in a single direction such as up or down. This can be achieved by the user placing their finger inside the ring and moving in a clockwise or counterclockwise direction. The select key 444 in the center of the outer ring 442 enables the user to select an item that was designated through the use of the outer ring 442.

In addition to the keys presented on the display screen 322, the handheld device 300 shown in FIG. 2B has a programmable physical key 150 on the side of the device 300. This programmable physical key 150 can be programmed to provide various functions relating to the handheld device 300. For example, it could be used to switch between telephone and data/text modes of operation. In another embodiment this key 150 would function as a way to return to a home screen.

In still another embodiment, a processing subsystem is configured to be installed in a handheld device 300, having capabilities for at least voice and email modes of communication, comprising an HTS display screen 322. The processing subsystem serves as an operating system for the incorporating device 300. The processing subsystem preferably includes a microprocessor 338 and a media storage device connected with other systems and subsystems of the device 300. The microprocessor 338 can be any integrated circuit or the like that is capable of performing computational or control tasks. The media storage device can exemplarily include a flash memory 324, a hard drive, a floppy disk, RAM 326, ROM, and other similar storage media.

As stated above, the operating system software controls operation of the incorporating handheld device 300. The operating system software is programmed to control operation of the handheld device 300 and is configured to transmit signals to a visual display that variously presents visibly different key arrangements as a function of the mode of operation of the incorporating device 300.

Preferably, the handheld device 300 is sized for portable use and adapted to be contained in a pocket. In one exemplary embodiment, the handheld device 300 is sized to be cradled in the palm of the user's hand. The handheld device 300 is advantageously sized such that it is longer than it is wide. This preserves the device's 300 cradleability while maintaining surface real estate for such features as the display screen 322 or an optional keyboard 332. In a development of this embodiment, the handheld device 300 is sized such that the width of the handheld device 300 measures between approximately two and three inches, thereby facilitating the device 300 to be palm cradled. Furthermore, these dimension requirements may be adapted in order to enable the user to easily carry the device 300.

Further aspects of the environments, devices and methods of employment described hereinabove are expanded upon in the following details. The handheld electronic device 300 includes an input portion and an output display portion. The output display portion can be a display screen 322, such as an LCD or other similar display devices.

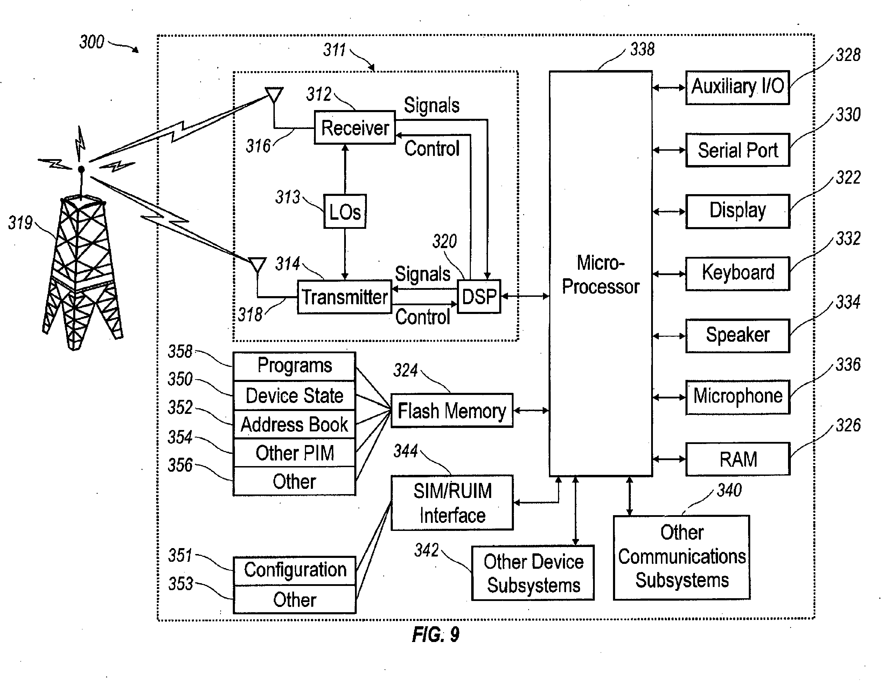

An exemplary handheld electronic device 300 and its cooperation in a wireless network 319 is exemplified in the block diagram of FIG. 9. This figure is exemplary only, and those persons skilled in the art will appreciate the additional elements and modifications necessary to make the device 300 work in particular network environments.

The block diagram of FIG. 9 representing the handheld device 300 interacting in the communication network 319 shows the device's 300 inclusion of a microprocessor 338 which controls the operation of the device 300. The communication subsystem 311 performs all communication transmission and reception with the wireless network 319. The microprocessor 338 further connects with an auxiliary input/output (I/O) subsystem 328, a serial port (preferably a Universal Serial Bus port) 330, a display screen 322, a keyboard 332, a speaker 334, a microphone 336, random access memory (RAM) 326, and flash memory 324. Other communication subsystems 340 and other device subsystems 342 are generally indicated as connected to the microprocessor 338 as well. An example of a communication subsystem 340 is that of a short range communication subsystem such as BLUETOOTH® communication module or an infrared device and associated circuits and components. Additionally, the microprocessor 338 is able to perform operating system functions and preferably enables execution of software applications on the handheld device 300.

The above-described auxiliary I/O subsystem 328 can take a variety of different subsystems including the above described navigation tool. Other auxiliary I/O devices can include external display devices and externally connected keyboards (not shown). While the above examples have been provided in relation to the auxiliary I/O subsystem, other subsystems capable of providing input or receiving output from the handheld electronic device 300 are considered within the scope of this disclosure. Additionally, other keys may be placed along the side of the device 300 to function as escape keys, volume control keys, scrolling keys, power switches, or user programmable keys, which may be programmed accordingly.

In an exemplary embodiment, the flash memory 324 is enabled to provide a storage location for the operating system, device programs, and data. While the operating system in a preferred embodiment is stored in flash memory 324, the operating system in other embodiments is stored in read-only memory (ROM) or similar storage element (not shown). As those skilled in the art will appreciate, the operating system, device application or parts thereof may be loaded in RAM 326 or other volatile memory.

In a preferred embodiment, the flash memory 324 contains programs/applications 358 for execution on the device 300 including an address book 352, a personal information manager (PIM) 354, and the device state 350. Furthermore, programs 358 and other information 356 including data can be segregated upon storage in the flash memory 324 of the device 300.

When the device 300 is enabled for two-way communication within the wireless communication network 319, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, and the Code Division Multiple Access (CDMA) network and those networks generally described as packet-switched, narrowband, data-only technologies mainly used for short burst wireless data transfer. For the systems listed above, the handheld device 300 must be properly enabled to transmit and receive signals from the communication network 319. Other systems may not require such identifying information. GPRS, UMTS, and EDGE require the use of a Subscriber Identity Module (SIM) in order to allow communication with the communication network 319. Likewise, most CDMA systems require the use of a Removable Identity Module (RUIM) in order to communicate with the CDMA network. The RUIM and SIM card can be used in multiple different handheld electronic devices 300. The handheld device 300 may be able to operate some features without a SIM/RUIM card, but it will not be able to communicate with the network 319. A SIM/RUIM interface 344 located within the device 300 allows for removal or insertion of a SIM/RUIM card (not shown). The SIM/RUIM card features memory and holds key configurations 351, and other information 353 such as identification and subscriber related information. With a properly enabled handheld device 300, two-way communication between the handheld device 300 and communication network 319 is possible.

If the handheld device 300 is enabled as described above or the communication network 319 does not require such enablement, the two-way communication enabled device 300 is able to both transmit and receive information from the communication network 319. The transfer of communication can be from the device 300 or to the device 300. In order to communicate with the communication network 319, the device 300 in a preferred embodiment is equipped with an integral or internal antenna 318 for transmitting signals to the communication network 319. Likewise the handheld device 300 in the preferred embodiment is equipped with another antenna 316 for receiving communication from the communication network 319. These antennae (316, 318) in another preferred embodiment are combined into a single antenna (not shown). As one skilled in the art would appreciate, the antenna or antennae (316, 318) in another embodiment are externally mounted on the device 300.

When equipped for two-way communication, the handheld device 300 features a communication subsystem 311. As is well known in the art, this communication subsystem 311 is modified so that it can support the operational needs of the device 300. The subsystem 311 includes a transmitter 314 and receiver 312 including the associated antenna or antennae (316, 318) as described above, local oscillators (LOs) 313, and a processing module 320 which in a preferred embodiment is a digital signal processor (DSP) 320.

It is contemplated that communication by the device 300 with the wireless network 319 can be any type of communication that both the wireless network 319 and device 300 are enabled to transmit, receive and process. In general, these can be classified as voice and data. Voice communication is communication in which signals for audible sounds are transmitted by the device 300 through the communication network 319. Data is all other types of communication that the device 300 is capable of performing within the constraints of the wireless network 319.

Exemplary embodiments have been described hereinabove regarding both handheld electronic devices 300, as well as the communication networks within which they cooperate. It should be appreciated, however, that a focus of the present disclosure is the enablement of an HTS display screen that is capable of providing improved tactile feedback to a user of the device.

## Claims

1. A haptic feedback display, comprising:
a display (322) configured to display graphical user interface items;
a touch-sensing assembly (329) with components disposed on or adjacent to the display, the touch-sensing assembly being adapted to recognize when the user has touched the display and to discriminate where the user has touched the display; and
a haptic assembly (331) with components disposed on an upper surface of the display, wherein the haptic assembly comprises transparent electrical conductors arranged in a grid on the upper surface of the display, and the haptic assembly being adapted to provide tactile electrical stimulation to the user when the user has touched the display and a skin resistance-measuring circuit, wherein the level of tactile electrical stimulation provided by the haptic assembly is varied as a function of resistance measured by the skin resistance-measuring circuit.

2. The haptic feedback display of claim 1, wherein the transparent electrical conductors are arranged in the form of interleaved combs.

3. The haptic feedback display of claim 1, wherein the transparent electrical conductors are formed from one of indium tin oxide and antimony tin oxide.

4. The haptic feedback display of claim 1, wherein the haptic assembly is adapted to provide tactile electrical stimulation in the form of electrical pulses.

5. The haptic feedback display of claim 1, wherein the haptic assembly is configured to vary the tactile electrical stimulation as a function of the graphical user interface item touched.

6. The haptic feedback display of claim 1, wherein the haptic assembly is configured to deliver between 1 µA and 5 mA of current to a user of the device.

7. The haptic feedback display of claim 6, wherein the haptic assembly is configured to deliver between 2 and 3 mA of current to a user of the device.

8. The haptic feedback display of claim 1, wherein the display is an LCD display.

9. The haptic feedback display of claim 8, wherein the display is a color LCD display.

10. A handheld electronic device, comprising a haptic feedback display as claimed in any preceding claim.

11. A method of providing haptic feedback to a user of a handheld electronic device based upon touch of a touch-sensitive display on the handheld electronic device, wherein the method comprises:
displaying images of buttons or icons on a touch-sensitive display of the handheld electronic device;
sensing touch by the user of the touch-sensitive display;
determining the location of the sensed touch;
measuring a resistance associated with the sensed touch using a skin resistance-measuring circuit; and
providing haptic feedback to the user in the form of tactile electrical stimulation upon touch of the touch-sensitive display, wherein the level of tactile electrical stimulation is varied as a function of the measured resistance.

12. The method of claim 11, further comprising adapting the tactile electrical stimulation in response to the location of the sensed touch.

## Patentansprüche

1. Anzeige mit haptischem Feedback, die aufweist:
eine Anzeige (322), die konfiguriert ist, Elemente einer graphischen Benutzerschnittstelle anzuzeigen;
eine Berührungs-Erfassungs-Baugruppe (329) mit Komponenten, die auf der oder angrenzend an die Anzeige angeordnet sind, wobei die Berührungs-Erfassungs-Baugruppe ausgebildet ist, zu erkennen, wenn der Benutzer die Anzeige berührt hat, und zu unterscheiden, wo der Benutzer die Anzeige berührt hat; und
eine haptische Baugruppe (331) mit Komponenten, die auf einer oberen Oberfläche der Anzeige angeordnet sind, wobei die haptische Baugruppe transparente elektrische Leiter aufweist, die in einem Gitter auf der oberen Oberfläche der Anzeige angeordnet sind, und wobei die haptische Baugruppe ausgebildet ist, eine taktile elektrische Stimulation für den Benutzer zu liefern, wenn der Benutzer die Anzeige und eine Hautwiderstandsmessungsschaltung berührt hat, wobei der Grad einer taktilen elektrischen Stimulation, die durch die haptische Baugruppe vorgesehen ist, als eine Funktion von Widerstand variiert, der von der Hautwiderstandsmessungsschaltung gemessen wird.

2. Anzeige mit haptischem Feedback gemäß Anspruch 1, wobei die transparenten elektrischen Leiter in der Form von verschachtelten Kämmen angeordnet sind.

3. Anzeige mit haptischem Feedback gemäß Anspruch 1, wobei die transparenten elektrischen Leiter aus einem aus Indium-Zinnoxid und Antimon-Zinnoxid gebildet sind.

4. Anzeige mit haptischem Feedback gemäß Anspruch 1, wobei die haptische Baugruppe ausgebildet ist, eine taktile elektrische Stimulation in der Form von elektrischen Pulsen zu liefern.

5. Anzeige mit haptischem Feedback gemäß Anspruch 1, wobei die haptische Baugruppe konfiguriert ist, die taktile elektrische Stimulation als eine Funktion des berührten Elements der graphischen Benutzerschnittstelle zu variieren.

6. Anzeige mit haptischem Feedback gemäß Anspruch 1, wobei die haptische Baugruppe konfiguriert ist, zwischen 1 µA und 5 mA von Strom an einen Benutzer der Vorrichtung zu liefern.

7. Anzeige mit haptischem Feedback gemäß Anspruch 6, wobei die haptische Baugruppe konfiguriert ist, zwischen 2 und 3 mA von Strom an einen Benutzer der Vorrichtung zu liefern.

8. Anzeige mit haptischem Feedback gemäß Anspruch 1, wobei die Anzeige eine LCD-Anzeige ist.

9. Anzeige mit haptischem Feedback gemäß Anspruch 8, wobei die Anzeige eine Farb-LCD-Anzeige ist.

10. Handgehaltene elektronische Vorrichtung, die eine Anzeige mit haptischem Feedback gemäß einem vorhergehenden Anspruch aufweist.

11. Verfahren zum Vorsehen eines haptischen Feedbacks für einen Benutzer einer handgehaltenen elektronischen Vorrichtung basierend auf einer Berührung einer berührungsempfindlichen Anzeige auf der handgehaltenen elektronischen Vorrichtung, wobei das Verfahren aufweist:
Anzeigen von Bildern von Tasten oder Symbolen auf einer berührungsempfindlichen Anzeige der handgehaltenen elektronischen Vorrichtung;
Erfassen einer Berührung der berührungsempfindlichen Anzeige durch den Benutzer;
Bestimmen der Position der erfassten Berührung;
Messen eines Widerstands, der zu der erfassten Berührung gehört, unter Verwendung einer Hautwiderstandsmessungsschaltung; und
Liefern eines haptischen Feedbacks an den Benutzer in der Form einer taktilen elektrischen Stimulation bei Berührung der berührungsempfindlichen Anzeige, wobei der Grad einer taktilen elektrischen Stimulation als eine Funktion des gemessenen Widerstands variiert.

12. Verfahren gemäß Anspruch 11, das weiter ein Anpassen der taktilen elektrischen Stimulation in Reaktion auf die Position der erfassten Berührung aufweist.

## Revendications

1. Dispositif d'affichage à retour haptique, comprenant :
un écran (322) configuré pour afficher des articles d'interface utilisateur graphique ;
un ensemble (329) d'activations par pression avec des composants disposés sur l'écran ou adjacents à celui-ci, l'ensemble d'activations par pression étant adapté pour reconnaitre à quel moment l'utilisateur a touché l'écran, et pour distinguer l'endroit de l'écran que l'utilisateur a touché ; et
un ensemble haptique (331) avec des composants disposés sur une surface supérieure de l'écran, où l'ensemble haptique comprend des conducteurs électriques transparents agencés sous forme de grille sur la surface supérieure de l'écran, et l'ensemble haptique étant adapté pour fournir des stimuli électriques tactiles à l'utilisateur lorsque ce dernier a touché l'écran et un circuit de mesure de résistance cutanée, où le niveau des stimuli électriques tactiles fournis par l'ensemble haptique varie en fonction de la résistance mesurée par le circuit de mesure de résistance cutanée.

2. Dispositif d'affichage à retour haptique de la revendication 1, dans lequel les conducteurs électriques transparents sont agencés en forme de peignes entrelacés.

3. Dispositif d'affichage à retour haptique de la revendication 1, dans lequel les conducteurs électriques transparents sont réalisés en oxyde d'indium-étain et en oxyde d'antimoine-étain.

4. Dispositif d'affichage à retour haptique de la revendication 1, dans lequel l'ensemble haptique est adapté pour fournir des stimuli électriques tactiles sous forme d'impulsions électriques.

5. Dispositif d'affichage à retour haptique de la revendication 1, dans lequel l'ensemble haptique est configuré pour faire varier les stimuli électriques tactiles en fonction de l'article graphique d'interface utilisateur touché.

6. Dispositif d'affichage à retour haptique de la revendication 1, dans lequel l'ensemble haptique est configuré pour délivrer entre 1µA et 5mA de courant à un utilisateur du dispositif.

7. Dispositif d'affichage à retour haptique de la revendication 6, dans lequel l'ensemble haptique est configuré pour délivrer entre 2 et 3mA de courant à un utilisateur du dispositif.

8. Dispositif d'affichage à retour haptique de la revendication 1, dans lequel l'écran est un écran LCD.

9. Dispositif d'affichage à retour haptique de la revendication 8, dans lequel l'écran est un écran LCD couleur.

10. Dispositif électronique portatif, comprenant un affichage à retour haptique tel que revendiqué dans l'une des revendications précédentes.

11. Procédé destiné à fournir un retour haptique à un utilisateur d'un dispositif électronique portatif selon la pression sur un écran tactile sur le dispositif électronique portatif, où le procédé comprend le fait :
d'afficher des images de boutons ou d'icônes sur un écran tactile du dispositif électronique portatif ;
de détecter une pression faite par l'utilisateur sur l'écran tactile ;
de déterminer l'emplacement de la pression détectée ;
de mesurer une résistance associée à la pression détectée en utilisant un circuit de mesure de résistance cutanée ; et
de fournir un retour haptique à l'utilisateur sous la forme de stimuli électriques tactiles lors d'une pression sur l'écran tactile, où le niveau des stimuli électriques tactiles varie en fonction de la résistance mesurée.

12. Procédé de la revendication 11, comprenant en outre l'adaptation des stimuli électriques tactiles en réponse à l'emplacement de la pression détectée.
